# EUROPEAN PATENT APPLICATION

(11) **EP 4 738 556 A1**
(43) Date of publication of application: **06.05.2026**
(21) Application number: 25212221.3
(22) Date of filing: 30.10.2025
(51) Int. Cl.: H01M 50/171, H01M 50/209, H01M 50/262

(54) **SNAP-FIT STRUCTURE FOR COVER PLATE AND CELL BRACKET, AND BATTERY MODULE**

(30) Priority: 31.10.2024 CN 202422656176 U; 29.11.2024 WO PCT/CN2024/135683
(71) Applicant: Eve Energy Co., Ltd., Huizhou, Guangdong 516006 (CN)
(72) Inventor: XIONG, Fengsheng, Huizhou, Guangdong, 516006 (CN)
(74) Representative: Biallo, Dario

(57) **Abstract**

Provided are a snap-fit structure for a cover plate and a cell bracket, and a battery module, which relate to the technical field of batteries. The snap-fit structure includes a first member (1) and a second member (2). The first member (1) has a clamping hole (11). The clamping hole (11) includes a first hole portion (111), a connecting portion (113) and a second hole portion (112) that are disposed and connected in sequence. The clamping hole (11) is contracted at the connecting portion (113). The second member (2) includes a base (21) and a first snap (22) and a second snap (23) that are disposed on a surface of the base (21). The first snap (22) is engaged with the first hole portion (111), and the second snap (23) is engaged with the second hole portion (112).

## Description

### TECHNICAL FIELD

The present application relates to the technical field of batteries, for example, a snap-fit structure for a cover plate and a cell bracket, and a battery module.

### BACKGROUND

A battery module mainly includes a battery box, a cell bracket and a cell group. The cell bracket is used for fixing the cell group, and both the cell bracket and the cell group are installed in the battery box. For the assembly of the cell group, the battery box is generally designed as a detachable split assembly structure. For example, the battery box includes a box body and a cover plate. After the cell bracket and the cell group are installed in the box body, the cover plate is assembled.

In the related art, in order to reduce costs and increase efficiency, a polycarbonate (PC) plate is generally selected as a cover plate, and the cover plate is engaged with a cell bracket via circular snap-fits. Owing to a snap head on the cell bracket larger than the corresponding clamping hole on the cover plate and the inherently low mechanical strength of the PC plate, it renders the clamping hole susceptible to being split open during the engagement process. This causes the PC plate to be scrapped, thereby increasing production costs.. However, an increase in the dimension of the clamping hole, intended as a preventative measure against damage to the PC plate, introduces a propensity for an insubstantial engagement. This, in turn, leads to installation failures, degradation in product quality, and an elevated product defect rate.

### SUMMARY

The present application provides a snap-fit structure for a cover plate and a cell bracket, and a battery module so that a damage rate of the cover plate during assembly can also be reduced even if a PC plate is selected as the cover plate, thereby reducing a cost and improving the yield rate of the product.

In a first aspect, the present application provides a snap-fit structure for a cover plate and a cell bracket. The snap-fit structure for the cover plate and the cell bracket includes a first member and a second member.

The first member has a clamping hole, where the clamping hole includes a first hole portion, a connecting portion and a second hole portion that are disposed and connected in sequence, and the clamping hole is contracted at the connecting portion.

The second member includes a base and a first snap and a second snap that are disposed on a surface of the base, where the first snap is engaged with the first hole portion, and the second snap is engaged with the second hole portion.

In a second aspect, the present application provides a battery module. The battery module includes a box body, a cover plate, a cell bracket and a cell group, where both the cell bracket and the cell group are installed in the box body, and the cover plate is engaged with the cell bracket via the snap-fit structure for the cover plate and the cell bracket provided in the first aspect.

The present application has the beneficial effects below.

The snap-fit structure provided in the present application includes a first member and a second member. For a clamping hole of the first member, a connecting portion can share acting forces in a process of snapping a first snap into a first hole portion and snapping a second snap into a second hole portion, thereby avoiding the tearing of the clamping hole due to an excessive snap force. In addition, since the clamping hole is contracted at the connecting portion, the snap strength between the first snap and the first hole portion and the snap strength between the second snap and the second hole portion can be ensured, and a defect of loose engagement caused by a manufacturing tolerance and a reserved gap can be eliminated, thereby improving the connection strength.

A snap-fit structure is applied to the battery module of the present application so that a damage rate of a cover plate during assembly can also be reduced even if a PC plate is selected as the cover plate of the battery module, thereby reducing a cost and improving the yield rate of the product.

### BRIEF DESCRIPTION OF THE DRAWINGS

FIG. 1 is a schematic diagram illustrating a structure of a cover plate and a cell bracket after assembly according to some embodiments of the present application.
FIG. 2 is a schematic diagram illustrating a structure of a cover plate and a cell bracket before assembly according to some embodiments of the present application.
FIG. 3 is a schematic diagram illustrating a structure of a snap-fit structure after assembly according to some embodiments of the present application is assembled.
FIG. 4 is a schematic diagram illustrating a structure of a snap-fit structure before assembly according to some embodiments of the present application.
FIG. 5 is a schematic diagram illustrating a structure of a battery module according to some embodiments of the present application.

### Reference list

- 100: cover plate
- 200: cell bracket
- 300: box body
- 400: cell group
- 1: first member
- 11: clamping hole
- 111: first hole portion
- 112: second hole portion
- 113: connecting portion
- 2: second member
- 21: base
- 22: first snap
- 221: first connecting portion
- 222: first snap-fit protrusion portion
- 23: second snap
- 231: second connecting portion
- 232: second snap-fit protrusion portion
- 24: support body

### DETAILED DESCRIPTION

In the present application, the term "comprising", "including", "having", or any other variant thereof is intended to encompass a non-exclusive inclusion so that a process, method, article, or apparatus that includes a series of elements not only includes those elements but also includes other elements that are not expressly listed or elements that are inherent to such process, method, article, or device. In the absence of more restrictions, the elements defined by the statement "including a ..." do not exclude the presence of additional identical elements in the process, method, article or apparatus that includes the elements.

In the present application, the term "and/or" is used for describing the association relationship between associated objects, which means that there can be three kinds of relationships. For example, A and/or B can indicate that A exists alone, A and B exist simultaneously, and B exists alone. In addition, the character "/" in the present application generally indicates the "and/or" relationship between the contextual associated objects.

In the present application, the term "connected", "joined", "coupled", or "mounted" may refer to directly connected, joined, coupled, or mounted or indirectly connected, joined, coupled, or mounted. For example, direct connection means that two members or assemblies are connected together without intermediate members, and indirect connection means that two members or assemblies are separately connected to at least one intermediate member and the two members or assemblies are connected to each other through the at least one intermediate member. Additionally, "connected" or "coupled" is not limited to physically or mechanically connected or coupled and may include electrically connected or coupled.

In the present application, it is to be understood by those of ordinary skill in the art that a relative term (such as "about", "approximately", and "substantially") used in conjunction with a quantity or a condition includes a stated value and has a meaning dictated by the context. For example, the relative term includes at least a degree of error associated with the measurement of a particular value, a tolerance caused by manufacturing, assembly, and use associated with the particular value, and the like. Such a relative term should also be considered as disclosing the range defined by the absolute values of the two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, basically parallel or basically perpendicular), "basically" may refer to plus or minus a certain degree (such as 1 degree, 5 degrees, 10 degrees, or more) based on an indicated angle.

In the present application, it is to be understood by those of ordinary skill in the art that a function implemented by an assembly may be implemented by one assembly, multiple assemblies, one part, or multiple parts. Similarly, a function implemented by a part may be implemented by one part, one assembly, or a combination of parts.

In the present application, the terms "up", "down", "left", "right", "front", and "rear", and other directional words are described based on the orientation or positional relationship shown in the drawings and should not be understood as limitations to the embodiments of the present application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It is also to be understood that the directional words such as the upper side, lower side, left side, right side, front side, and rear side not only represent perfect orientations but can also be understood as lateral orientations. For example, the lower side may include directly below, bottom left, bottom right, front bottom, and rear bottom.

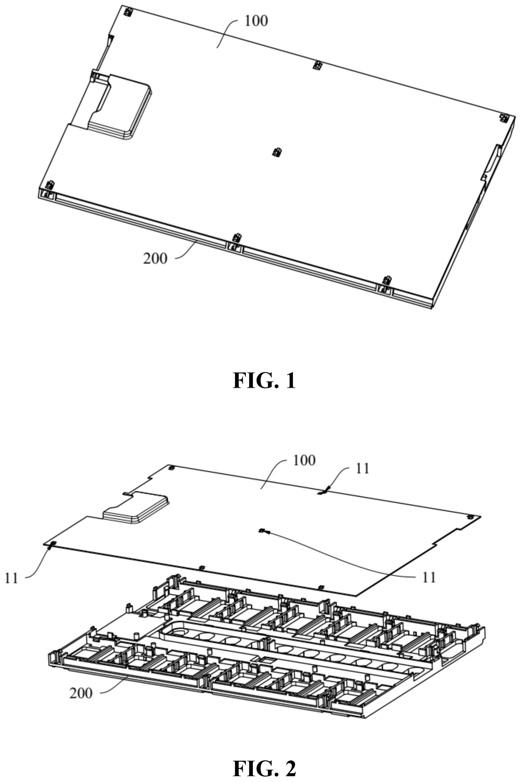

FIG. 1 is a schematic diagram illustrating a structure obtained after a cover plate 100 and a cell bracket 200 according to an embodiment of the present application are assembled. FIG. 2 is a schematic diagram illustrating a structure obtained before a cover plate 100 and a cell bracket 200 according to an embodiment of the present application are assembled. As shown in FIGS. 1, 2 and 5, the present application provides a battery module. The battery module includes a box body 300, a cover plate 100, a cell bracket 200 and a cell group 400. Both the cell bracket 200 and the cell group 400 are installed in the box body 300. The cell bracket 200 has multiple snaps, and the cover plate 100 has multiple clamping holes 11. The snaps are engaged with the clamping holes 11 in one-to-one correspondence, thereby achieving the engagement between the cover plate 100 and the cell bracket 200 to improve the assembly efficiency of the battery module.

The present application provides a snap-fit structure for the cover plate 100 and the cell bracket 200. This avoids a defect that when the cover plate is engaged with the cell bracket, since a size of a head of the snap on the cell bracket is greater than a size of the clamping hole on the cover plate and the cover plate has relatively low strength, the clamping hole of the cover plate is easily cracked by the head of the snap. In this manner, a damage rate of the cover plate 100 during assembly can also be reduced even if a PC plate is selected as the cover plate 100, thereby reducing a cost and improving the yield rate of the product.

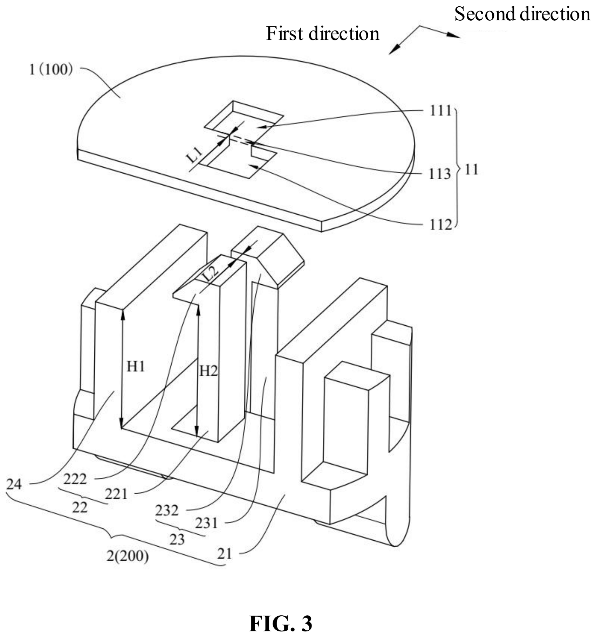

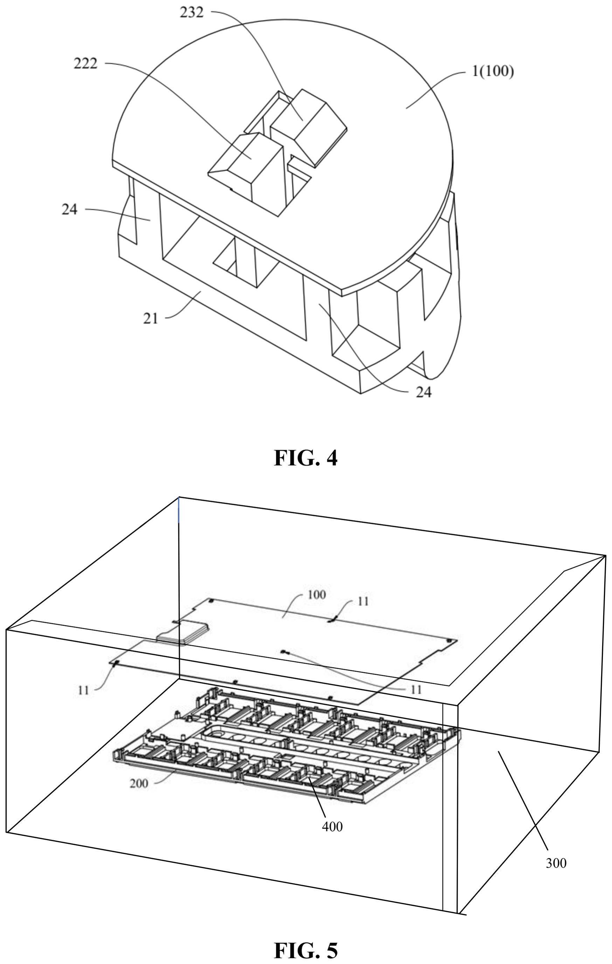

FIG. 3 is a schematic diagram illustrating a structure obtained after a snap-fit structure according to an embodiment of the present application is assembled. FIG. 4 is a schematic diagram illustrating a structure obtained before a snap-fit structure according to an embodiment of the present application is assembled. As shown in FIGS. 3 and 4, the snap-fit structure includes a first member 1 and a second member 2. The first member 1 has a clamping hole 11. The clamping hole 11 includes a first hole portion 111, a connecting portion 113 and a second hole portion 112 that are disposed and connected in sequence. The clamping hole 11 is contracted at the connecting portion 113. The second member 2 includes a base 21 and a first snap 22 and a second snap 23 that are disposed on a surface of the base 21. The first snap 22 is engaged with the first hole portion 111, and the second snap 23 is engaged with the second hole portion 112.

For the clamping hole 11 of the first member 1, the connecting portion 113 can share acting forces in a process of snapping the first snap 22 into the first hole portion 111 and snapping the second snap 23 into the second hole portion 112, thereby avoiding the tearing of the clamping hole 11 due to an excessive snap force. In addition, since the clamping hole 11 is contracted at the connecting portion 113, the snap strength between the first snap 22 and the first hole portion 111 and the snap strength between the second snap 23 and the second hole portion 112 can be ensured, and a defect of loose engagement caused by a manufacturing tolerance and a reserved gap can be eliminated, thereby improving the connection strength.

When the snap-fit structure provided in the present application is used for the engagement between the cover plate 100 and the cell bracket 200, the first member 1 is the cover plate 100, and the second member 2 is the cell bracket 200. Referring to FIGS. 2 and 3, six clamping holes 11 exist on a peripheral side of the cover plate 100 and are divided into two groups that are located on two sides of the cover plate 100, respectively, and one clamping hole 11 exists at a middle position of the cover plate 100. Similarly, the number and layout of snaps on the cell bracket 200 are the same as those of clamping holes 11, thereby ensuring the connection strength between the cover plate 100 and the cell bracket 200. Other numbers and layouts may also be selected as the number and layout of clamping holes 11 and the number and layout of snaps as needed and are not limited here. It may be understood that the snap-fit structure provided in the present application may also be used for the engagement between other plate-shaped members which are not limited here.

With continued reference to FIGS. 3 and 4, the first hole portion 111 and the second hole portion 112 are both rectangular holes, the first hole portion 111 and the second hole portion 112 are disposed at intervals in parallel along a first direction and are arranged in a staggered manner along a second direction, and the first direction is perpendicular to the second direction. Disposing in this manner can facilitate the processing of the clamping hole 11 and is conducive to improving the dimensional accuracy of the clamping hole 11, thereby ensuring the snap strength.

The connecting portion 113 is a rectangular hole, and for two sides of the connecting portion 113 that are disposed oppositely, one side coincides with one side of the first hole portion 111, and the other side coincides with one side of the second hole portion 112. The entire clamping hole 11 is roughly Z-shaped. This design can facilitate the processing of the clamping hole 11 and is conducive to improving the dimensional accuracy of the clamping hole 11, thereby ensuring the snap strength.

The first snap 22 and the second snap 23 are disposed at intervals along the first direction, and along the first direction, an interval between the first snap 22 and the second snap 23 is greater than an interval between the first hole portion 111 and the second hole portion 112 to ensure that the clamping hole 11 can exert a gathering acting force on the first snap 22 and the second snap 23 along the first direction to ensure the snap strength after the engagement.

In this embodiment, a length of the connecting portion 113 along the first direction is L1, and an interval between the first snap 22 and the second snap 23 along the first direction is L2, where 0.15 mm ≤ L2-L1 ≤ 0.25 mm. This value range can ensure the snap strength between the snap and the clamping hole 11 and reduce the probability of tearing the clamping hole 11 due to an excessive snap force, thereby improving the yield rate of the product. The reason is as follows: if the difference value between L2 and L1 is too small, the gathering force exerted by the clamping hole 11 on the first snap 22 and the second snap 23 is relatively small, and the engagement is insecure; if the difference value between L2 and L1 is too large, the gathering force exerted by the clamping hole 11 on the first snap 22 and the second snap 23 is too large, and the engagement is secure, but a risk of tearing the clamping hole 11 exists due to an excessive snap force.

The first snap 22 has a first connecting portion 221 and a first snap-fit protrusion portion 222 vertically connected to an end of the first connecting portion 221, the first connecting portion 221 is connected to the base 21, and the first snap-fit protrusion portion 222 is capable of passing through the first hole portion 111 and abutting against the first member 1. The second snap 23 has a second connecting portion 231 and a second snap-fit protrusion portion 232 vertically connected to an end of the second connecting portion 231, the second connecting portion 231 is connected to the base 21, and the second snap-fit protrusion portion 232 is capable of passing through the second hole portion 112 and abutting against the first member 1.

The first connecting portion 221 and the second connecting portion 231 are parallel and face each other, where the first snap-fit protrusion portion 222 and the second snap-fit protrusion portion 232 are parallel and face away from each other to adapt to the first hole portion 111 and the second hole portion 112 that are arranged in a staggered manner, thereby ensuring the snap strength between the snap and the clamping hole 11.

The second member 2 further includes support bodies 24 disposed on the surface of the base 21. Two support bodies 24 are disposed at intervals along the second direction. The first snap 22 and the second snap 23 are located between the two support bodies 24. The support bodies 24 are capable of abutting against the first member 1 and are configured to support the first member 1, thereby ensuring that balanced forces are applied to the first member 1 and reducing a probability that the first member 1 is deformed due to concavity.

A distance between each of the two support bodies 24 and the surface of the base 21 is H1, and both a minimum distance between the first snap-fit protrusion portion 222 and the surface of the base 21 and a minimum distance between the second snap-fit protrusion portion 232 and the surface of the base 21 are H2, where 0.2 mm ≤ H1-H2 ≤ 0.4 mm. This range enables the support bodies 24, the first snap-fit protrusion portion 222 and the second snap-fit protrusion portion 232 to stably clamp the first member 1, thereby ensuring the connection strength between the first member 1 and the second member 2. The reason is as follows: if the difference value between H1 and H2 is too small, clamping forces applied by the support bodies 24, the first snap-fit protrusion portion 222 and the second snap-fit protrusion portion 232 to the first member 1 are too large, easily causing the first member 1 to be squeezed into deformation and even torn; if the difference value between H1 and H2 is too large, the clamping forces applied by the support bodies 24, the first snap-fit protrusion portion 222 and the second snap-fit protrusion portion 232 to the first member 1 are too small, the engagement is insecure, and a risk that the first member 1 shakes up and down even exists.

The embodiment of the present application provides the following solution for the clamping hole 11, the first snap 22 and the second snap 23: the first hole portion 111 and the second hole portion 112 have the same size and both have a length of 2.4 mm along the first direction and a length of 2.45 mm along the second direction, and the connecting portion 113 has a length of 1.2 mm along the second direction and a length of 0.3 mm along the first direction; the first snap-fit protrusion portion 222 and the second snap-fit protrusion portion 232 have the same size and both have a length of 2.2 mm along the first direction and a length of 2.25 mm along the second direction, the first connecting portion 221 and the second connecting portion 231 have the same size and both have a length of 2.25 mm along the first direction, a length of 1 mm along the second direction and a distance of 6.3 mm from the surface of the base 21, and an interval between the first connecting portion 221 and the second connecting portion 231 along the first direction is 0.5 mm; the support body 24 has a length of 7.15 mm along the first direction, a length of 1.3 mm along the second direction and a distance of 6.69 mm from the surface of the base 21.

In a process of engaging the first member 1 with the second member 2, since the first snap-fit protrusion portion 222 of the first snap 22 and the second snap-fit protrusion portion 232 of the second snap 23 are disposed in a back-to-back manner, a hole wall of the clamping hole 11 can apply reverse pressures to the first snap-fit protrusion portion 222 and the second snap-fit protrusion portion 232, resulting in the deformation of the first connecting portion 221 and the second connecting portion 231. After the first snap-fit protrusion portion 222 is precisely snapped into the first hole portion 111 and the second snap-fit protrusion portion 232 is precisely snapped into the second hole portion 112, the acting forces of the hole wall are no longer applied to the first snap-fit protrusion portion 222 and the second snap-fit protrusion portion 232. In this case, the first connecting portion 221 and the second connecting portion 231 return to original states and enable both the first snap-fit protrusion portion 222 and the second snap-fit protrusion portion 232 to abut against and snap tightly into the first member 1, thereby achieving a self-locking effect.

For the snap-fit structure provided in the present application, the clamping hole 11 is designed as two staggered first hole portion 111 and second hole portion 112, and the snaps are designed as two independent first snap 22 and second snap 23 that face opposite directions, thereby avoiding mutual deformation and limit. On the one hand, the deformation amount can be increased, thereby facilitating the installation and preventing the first member 1 from being torn at the clamping hole 11. On the other hand, the rebound amount of the snap is increased, thereby eliminating the defect of insecure engagement caused by the manufacturing tolerance and the reserved gap, improving the snap strength and preventing the first member 1 and the second member 2 from being separated due to vibration.

## Claims

1. A snap-fit structure for a cover plate and a cell bracket, comprising:
a first member (1) with a clamping hole (11), wherein the clamping hole (11) comprises a first hole portion (111), a connecting portion (113) and a second hole portion (112) that are disposed and connected in sequence, and the clamping hole (11) is contracted at the connecting portion (113); and
a second member (2) comprising a base (21) and a first snap (22) and a second snap (23) that are disposed on a surface of the base (21), wherein the first snap (22) is engaged with the first hole portion (111), and the second snap (23) is engaged with the second hole portion (112).

2. The snap-fit structure for the cover plate and the cell bracket according to claim 1, wherein the first hole portion (111) and the second hole portion (112) are both rectangular holes, the first hole portion (111) and the second hole portion (112) are disposed at intervals in parallel along a first direction and are arranged in a staggered manner along a second direction, and the first direction is perpendicular to the second direction.

3. The snap-fit structure for the cover plate and the cell bracket according to claim 2, wherein the first snap (22) and the second snap (23) are disposed at intervals along the first direction, and along the first direction, an interval between the first snap (22) and the second snap (23) is greater than an interval between the first hole portion (111) and the second hole portion (112).

4. The snap-fit structure for the cover plate and the cell bracket according to claim 3, wherein the first snap (22) has a first connecting portion (221) and a first snap-fit protrusion portion (222) vertically connected to an end of the first connecting portion (221), and the first snap-fit protrusion portion (222) is capable of passing through the first hole portion (111) and abutting against the first member (1); and
the second snap (23) has a second connecting portion (231) and a second snap-fit protrusion portion (232) vertically connected to an end of the second connecting portion (231), and the second snap-fit protrusion portion (232) is capable of passing through the second hole portion (112) and abutting against the first member (1).

5. The snap-fit structure for the cover plate and the cell bracket according to claim 4, wherein the first connecting portion (221) and the second connecting portion (231) are parallel and face each other, and wherein the first snap-fit protrusion portion (222) and the second snap-fit protrusion portion (232) are parallel and face away from each other.

6. The snap-fit structure for the cover plate and the cell bracket according to claim 5, wherein the second member (2) further comprises two support bodies (24) disposed on the surface of the base (21), the two support bodies (24) are disposed at intervals along the second direction, the first snap (22) and the second snap (23) are located between the two support bodies (24), and the two support bodies (24) are capable of abutting against the first member (1).

7. The snap-fit structure for the cover plate and the cell bracket according to claim 6, wherein a distance between each of the two support bodies (24) and the surface of the base (21) is H1, and both a minimum distance between the first snap-fit protrusion portion (222) and the surface of the base (21) and a minimum distance between the second snap-fit protrusion portion (232) and the surface of the base (21) are H2, wherein 0.2 mm ≤ H1-H2 ≤ 0.4 mm.

8. The snap-fit structure for the cover plate and the cell bracket according to any one of claims 2 to 7, wherein the connecting portion (113) is a rectangular hole, and for two sides of the connecting portion (113) that are disposed oppositely, one side coincides with one side of the first hole portion (111), and the other side coincides with one side of the second hole portion (112).

9. The snap-fit structure for the cover plate and the cell bracket according to claim 8, wherein a length of the connecting portion (113) along the first direction is L1, and an interval between the first snap (22) and the second snap (23) along the first direction is L2, wherein 0.15 mm ≤ L2-L1 ≤ 0.25 mm.

10. A battery module, comprising: a box body (300), a cover plate (100), a cell bracket (200) and a cell group (400), wherein both the cell bracket (200) and the cell group (400) are installed in the box body (300), and the cover plate (100) is engaged with the cell bracket (200) via the snap-fit structure for the cover plate and the cell bracket according to any one of claims 1 to 9.
